# FASCICULE DE BREVET EUROPEEN

(11) **EP 3 124 884 B1**
(45) Date de publication et mention de la délivrance du brevet: **29.04.2020**
(21) Numéro de dépôt: 16180660.9
(22) Date de dépôt: 21.07.2016
(51) Int. Cl.: F24F 7/06, F24F 7/08, F24F 12/00, F24F 1/00

(54) **SYSTÈME DE RENOUVELLEMENT ET DE TRAITEMENT D'AIR DÉCENTRALISÉ, ET DISPOSITIF DE RENOUVELLEMENT ET DE TRAITEMENT D'AIR POUR UN TEL SYSTÈME**
SYSTEM ZUR LUFTUMWÄLZUNG UND DEZENTRALISIERTEN LUFTAUFBEREITUNG, UND VORRICHTUNG ZUR LUFTUMWÄLZUNG UND LUFTAUFBEREITUNG FÜR EIN SOLCHES SYSTEM
DECENTRALISED AIR RENEWAL AND TREATMENT SYSTEM, AND AIR RENEWAL AND TREATMENT DEVICE FOR SUCH A SYSTEM

(30) Priorité: 30.07.2015 FR 1501637
(43) Date de publication de la demande: 01.02.2017
(73) Titulaire: INEX BET, 93100 Montreuil (FR)
(72) Inventeur: Philippart, Xavier, 78100 SAINT GERMAIN EN LAYE (FR)
(74) Mandataire: Brungard, Yves Francois

(56) Documents cités:
- EP-A2- 1 832 818
- WO-A1-2005/036065
- WO-A1-2009/003472
- DE-U1-202007 001 644

## Description

La présente invention concerne un nouveau système de renouvellement et de traitement d'air décentralisé, ainsi que les dispositifs utilisés dans ce système, destinés à être placés de manière indépendante dans différents locaux d'un bâtiment. Elle trouve à s'appliquer notamment pour des bureaux cloisonnés, des bureaux paysagés, des salles de réunion, en hôtellerie, dans le secteur hospitalier, etc.

Dans de telles applications, notamment les immeubles de bureaux, il est courant d'assurer le traitement et le renouvellement d'air de manière centralisée, au moyen d'une centrale de traitement et de renouvellement, qui comporte généralement aussi des moyens de climatisation et de récupération d'énergie.

Un inconvénient de telles installations réside dans l'encombrement de la centrale, nécessaire pour traiter de gros volumes d'air correspondants à des ensembles de locaux parfois importants, et qui nécessite donc des locaux techniques également volumineux. Un autre inconvénient encore réside dans les nombreuses gaines techniques, parfois de grande longueur, nécessaires pour raccorder chaque local à la centrale, et cela d'autant plus que, pour chaque local, il faut au moins une gaine d'extraction et une gaine d'amenée, et les bouches correspondantes doivent être disposées de manière adéquate, suffisamment espacées, pour assurer une aération et une climatisation correcte du local. La gestion de ces grandes longueurs de gaines et leur entretien de manière générale pour assurer leur maintien en parfait état sanitaire, peut être particulièrement compliqués. De plus, il peut être compliqué de gérer indépendamment pour chaque local à la fois les besoins en renouvellement d'air et les besoins de confort thermique. Par exemple, dans des locaux différents, il peut y avoir un besoin d'assurer un renouvellement d'air équivalent mais d'y assurer des températures différentes.

Pour résoudre ou au moins diminuer ces problèmes, on connaît aussi des dispositifs de traitement d'air décentralisés, c'est-à-dire assurant localement au moins une des fonctions de traitement ou de renouvellement d'air.

On connaît par exemple par US20080250800, un dispositif indépendant, mobile, pouvant être déplacé d'une pièce à l'autre et connecté sur des entrées et sorties d'air extérieures aménagées à cet effet. On connaît aussi des dispositifs indépendants, placés de manière fixe prés d'une fenêtre, comme dans CN203518064U par exemple. Mais ces dispositifs utilisent une surface au sol relativement importante.

On connaît encore des dispositifs indépendants placés en faux plancher, c'est-à-dire sous le plancher normalement utilisable. Mais une telle disposition, relativement peu commune, implique une hauteur de plénum de plancher suffisante pour y loger les composants du dispositif, ce qui conduit à augmenter la hauteur entre étages. De plus, les bouches de communication avec le local sont réalisées dans le plancher, pour diffuser et aspirer l'air au niveau du sol, ce qui nécessite d'aménager le local, en mobilier, etc., en fonction des grilles de sol. Ces bouches et grilles situées au sol sont de plus fortement susceptibles d'être endommagées si on marche dessus, et de plus encore, les poussières s'y accumulent ce qui implique des nettoyages fréquents et plus compliqués qu'un sol lisse.

Une difficulté générale d'installations indépendantes est d'arriver à gérer des petits débits, typiquement inférieurs à 250, voire 150 m3/heure, adaptés pour des locaux de relativement petites dimensions, typiquement des bureaux de l'ordre de 15 m², alors que les installations courantes sont généralement prévues pour des débits très supérieurs à 300 m³/heure.

On connaît par le document WO 2009/003472 A1, un système de ventilation décentralisé comportant deux modules combinés permettant le renouvellement de l'air d'une part et le refroidissement/chauffage d'autre part. Le volume d'air subissant un traitement climatique est égal au volume d'air renouvelé. Ainsi, le volume d'air renouvelé est conditionné par le besoin en refroidissement/chauffage et est en général largement supérieur à ce qu'il est nécessaire uniquement pour le renouvellement. Même si le dispositif comprend des moyens d'échange thermique entre l'air entrant et l'air sortant, le rendement n'est pas parfait et cet excès de renouvellement d'air conduit à des déperditions thermiques.

La présente invention a pour but de résoudre les problèmes évoqués ci-dessus, et vise en particulier à proposer un dispositif de renouvellement et de traitement d'air décentralisé qui ne génère pas d'encombrement au sol et qui puisse être aisément adapté pour différentes configurations de locaux. Elle vise en particulier à permettre l'adaptation de l'installation en fonction des raccordements possibles ou souhaités des différentes sources, froides et/ou chaudes, de fluide utilisé pour la mise à température souhaitée de l'air.

Elle vise aussi à permettre ou faciliter l'individualisation, pour chaque local concerné, du traitement et du renouvellement d'air, par exemple pour continuer à assurer un maintien en température d'un local temporairement inoccupé, et qui ne nécessite donc pas un renouvellement d'air régulier, ou assurer des températures différentes dans des locaux ou le renouvellement d'air est cependant identique.

Avec ces objectifs en vue, l'invention a pour objet un système de renouvellement et de traitement d'air décentralisé pour un local ou des locaux situé(s) dans un bâtiment, le système comportant une unité de traitement climatique et une unité de renouvellement d'air, combinées en un module unique indépendant agencé pour être placé dans un plénum situé au-dessus d'un faux-plafond d'un local, et comportant à cet effet des orifices de communication avec l'extérieur du bâtiment, disposés sur l'unité de renouvellement d'air et reliés à des bouches respectives destinées à être ménagées dans la paroi extérieure du bâtiment, pour aspirer de l'air neuf extérieur et rejeter de l'air intérieur, et des orifices de communication avec le local, disposés sur l'unité de traitement climatique et reliés à des bouches destinées à être aménagées dans le faux plafond pour assurer une circulation d'air dans le local, et des moyens de connexion disposés sur l'unité de traitement climatique pour connecter un ou des moyens de refroidissement et/ou de chauffage, l'unité de traitement climatique et l'unité de renouvellement d'air étant situées de part et d'autre d'une chambre de recirculation où s'effectue un mélange d'air aspiré du local et d'air neuf issu de l'unité de renouvellement d'air, le module étant raccordé :
- par une gaine d'aspiration d'air extérieur à une bouche d'entrée destinée à être placée en traversée du mur extérieur, dans la partie supérieure de celui-ci, situé au-dessus du niveau du faux plafond ;
- par une gaine de refoulement d'air à une bouche de sortie destinée à être placée en traversée du mur extérieur, dans la partie supérieure de celui-ci,
- par une gaine de soufflage à une bouche de répartition destinée à être placée en traversée du faux plafond, vers une extrémité du local,
- par au moins une gaine de recirculation à une bouche d'aspiration destinée à être placée en traversée du faux plafond, vers une extrémité opposée du local.

L'invention a aussi pour objet un dispositif de renouvellement et de traitement d'air pour un système de renouvellement et de traitement d'air décentralisé tel que défini précédemment, le dispositif étant agencé sous forme d'un module unique indépendant agencé pour être placé dans un plénum situé au-dessus d'un faux-plafond d'un local, et en ce qu'il comporte :
- une unité de traitement climatique et une unité de renouvellement d'air combinées, situées de part et d'autre d'une chambre de recirculation où s'effectue un mélange d'air aspiré du local et d'air neuf issu de l'unité de renouvellement d'air,
- des orifices de communication avec l'extérieur du bâtiment disposés sur l'unité de renouvellement d'air, agencés pour aspirer de l'air neuf extérieur et rejeter de l'air intérieur,
- des orifices de communication avec le local disposés sur l'unité de traitement climatique et la chambre de recirculation et agencés pour assurer une circulation d'air dans le local,
- des moyens de connexion disposés sur l'unité de traitement climatique pour connecter un ou des moyens de refroidissement et/ou de chauffage.

Les moyens de refroidissement peuvent notamment comporter un circuit de fluide frigorigène, par exemple une boucle d'eau glacée. Les moyens de chauffage peuvent notamment comporter une boucle d'eau chaude, ou une résistance électrique. Les moyens de refroidissement et/ou de chauffage peuvent aussi être combinés en utilisant des systèmes de pompe à chaleur réversible sur boucle d'eau tempérée ou sur unité de condensation et évaporation extérieure.

Le système selon l'invention permet ainsi d'individualiser local par local le renouvellement et le traitement d'air, par un seul ensemble propre à un local, ou éventuellement à un petit groupe de locaux adjacents, simple à installer et à connecter. Il évite le recours à des gaines de grande longueur, classiquement utilisées dans les installations de climatisation centralisées d'immeubles de bureaux ou similaires. Par ses dimensions adaptées et sa compacité, le module permet d'assurer une gestion optimisée des flux d'air et de la consommation d'énergie individualisée au niveau de chaque local, ce qui assure une indépendance énergétique de chaque local, sans interférence d'un local à l'autre et sans risque de dissémination microbienne entre locaux. L'interposition d'une chambre de recirculation entre l'unité de traitement climatique et l'unité de renouvellement d'air permet de gérer les débits d'air climatisé et de renouvellement indépendamment l'un de l'autre. En particulier il est possible d'avoir un débit d'air dans l'unité de traitement thermique plus important que celui de renouvellement d'air.

Selon une disposition préférentielle, la hauteur du module unique indépendant est inférieure à 300 mm, préférentiellement de l'ordre de 250 mm, sa longueur est de l'ordre de 2000 à 2500 mm et sa largeur de l'ordre de 1100 à 1300 mm.

Par la dimension réduite en hauteur du module selon l'invention, celui-ci peut être placé facilement en plénum de faux plafond classique, et son encombrement global permet de le disposer et le connecter, tant pour ce qui est des circuits de circulation d'air que des circuits de fluides froids ou chauds, selon différentes configurations qui seront détaillées par la suite.

Selon une disposition particulière, l'unité de traitement climatique comporte, successivement dans le sens de circulation du flux d'air, un ensemble de filtration et purification d'air en communication directe avec la chambre de recirculation, un ensemble de climatisation, pouvant comporter une batterie de chauffage et/ou une batterie de rafraîchissement, ou d'autres moyens d'apport de chauffage ou de froid, un ventilateur de soufflage, et une chambre de diffusion.

L'unité de renouvellement d'air comporte, successivement dans le sens de circulation du flux d'air, une chambre d'aspiration d'air neuf, un filtre à air neuf, un échangeur thermique comportant un circuit d'entrée et un circuit de sortie, un ventilateur d'air neuf à débit variable disposé pour souffler l'air neuf traversant le circuit d'entrée de l'échangeur dans la chambre de recirculation vers l'ensemble de filtration et purification, et un ventilateur de rejet d'air à débit variable agencé entre une chambre de reprise et l'échangeur pour souffler de l'air repris vers une chambre de sortie à travers le circuit de sortie de l'échangeur. Le filtre à air neuf permet non seulement de filtrer l'air mais aussi de le répartir uniformément sur l'échangeur thermique en aval. Le débit des deux ventilateurs varie suivant la qualité de l'air grâce à une sonde CO₂ disposée dans la chambre de recirculation.

De manière avantageuse, l'unité de renouvellement d'air comporte en outre un by-pass d'admission libre reliant l'orifice d'aspiration d'air extérieur avec l'amont du ventilateur d'air neuf pour admettre de l'air neuf sans échange thermique avec l'air repris. Il est ainsi possible d'assurer un rafraîchissement gratuit lorsque la température extérieure est plus faible que celle de l'air repris. Ceci peut être utile pour un refroidissement de locaux pendant la nuit ou même en journée.

Les orifices de communication avec le local comportent au moins un orifice de reprise d'air disposé sur la chambre de recirculation et au moins un orifice de soufflage disposé sur la chambre de diffusion de l'unité de traitement climatique.

Les orifices de communication avec l'extérieur du bâtiment comportent un orifice d'entrée d'air disposé sur la chambre d'aspiration d'air neuf, et un orifice d'extraction d'air situé sur la chambre de sortie.

Selon d'autres dispositions encore, un registre motorisé d'air neuf est disposé dans la chambre d'aspiration d'air neuf, pour réguler le débit d'air neuf admis en fonction de la force du vent sur la façade, et un by-pass anti-condensation avec registre motorisé est disposé entre le ventilateur de rejet d'air et l'échangeur pour réchauffer l'air neuf entrant afin de ne pas condenser sur l'échangeur.

Le module comporte également un compartiment électrique, où sont regroupées les appareillages de commande et régulation et un compartiment hydraulique, disposé à côté de l'ensemble de climatisation, où sont assurées les connexions des batteries de chauffage et de rafraîchissement avec les circuits de fluides chauds et/ou froids.

L'unité de traitement climatique et l'unité de renouvellement d'air sont disposées l'une contre l'autre dans le sens de la longueur du module, reliées par la chambre de recirculation, et les compartiments électriques et hydrauliques sont disposés latéralement sur les côtés de l'unité de traitement climatique, de sorte que l'ensemble des organes constituant le module tiennent dans sa faible épaisseur, permettant son installation dans le plénum de faux-plafond.

Concernant les circuits de fluide de chauffage et rafraîchissement, et leur connexion à un ensemble de climatisation, plusieurs configurations sont possibles : par exemple une batterie chaude et une batterie froide, avec une alimentation en fluide de ces batteries soit en quatre tubes, ou en deux tubes avec vanne de répartition, ou avec une résistance électrique de chauffage ; ou encore avec un système de pompe à chaleur réversible comportant une unité de condensation/évaporation extérieure ou une pompe à chaleur interne sur boucle d'eau. On notera que ces différentes variantes permettent de conserver l'organisation d'ensemble des organes constitutifs du module selon l'invention, en adaptant seulement les connexions à un ensemble de climatisation, et l'ensemble de climatisation lui-même le cas échéant, mais sans modifications des autres organes et tout en restant dans le même encombrement de base du module.

D'autres avantages apparaîtront dans la description qui va être faite d'un dispositif conforme à l'invention et de plusieurs variantes de mise en œuvre, ainsi que de plusieurs variantes de l'ensemble de climatisation et de ses connexions.

On se reportera aux dessins annexés dans lesquels :
- la figure 1 est une vue d'un premier mode d'implantation du dispositif de renouvellement et de traitement d'air dans le plénum de faux plafond d'un bureau,
- la figure 2 est une vue de dessus de cette implantation,
- la figure 3 est une vue en perspective du dispositif montrant ses différents constituants et leur implantation relative,
- les figures 4 et 5 sont des vues similaires aux figures 1 et 2 dans le cas d'un deuxième mode d'implantation,
- les figures 6 et 7 sont des vues similaires aux figures 1 et 2 dans le cas d'un troisième mode d'implantation,
- les figures 8 à 13 illustrent six variantes de raccordement du dispositif sur des sources d'énergies chaudes ou froides,

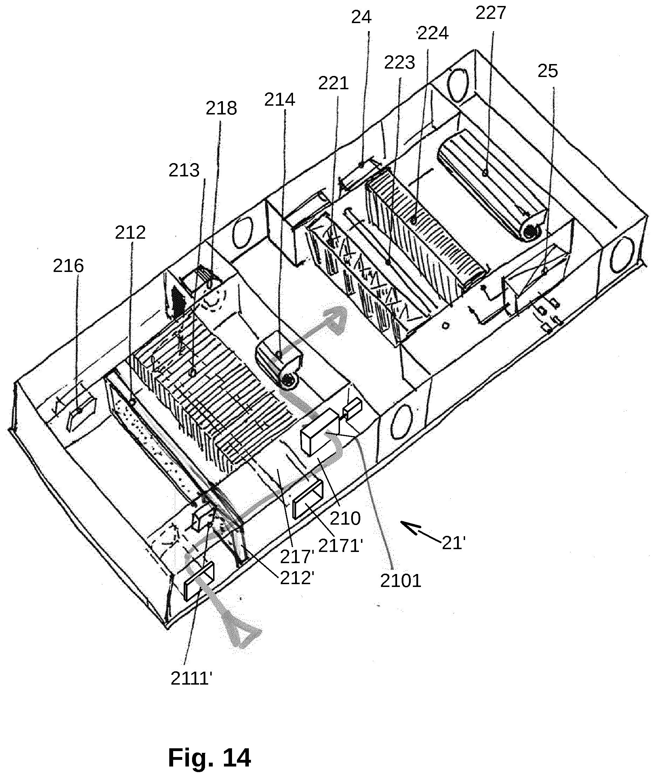

- la figure 14 est une vue similaire à la figure 3 d'un autre mode de réalisation du dispositif de renouvellement et de traitement d'air.

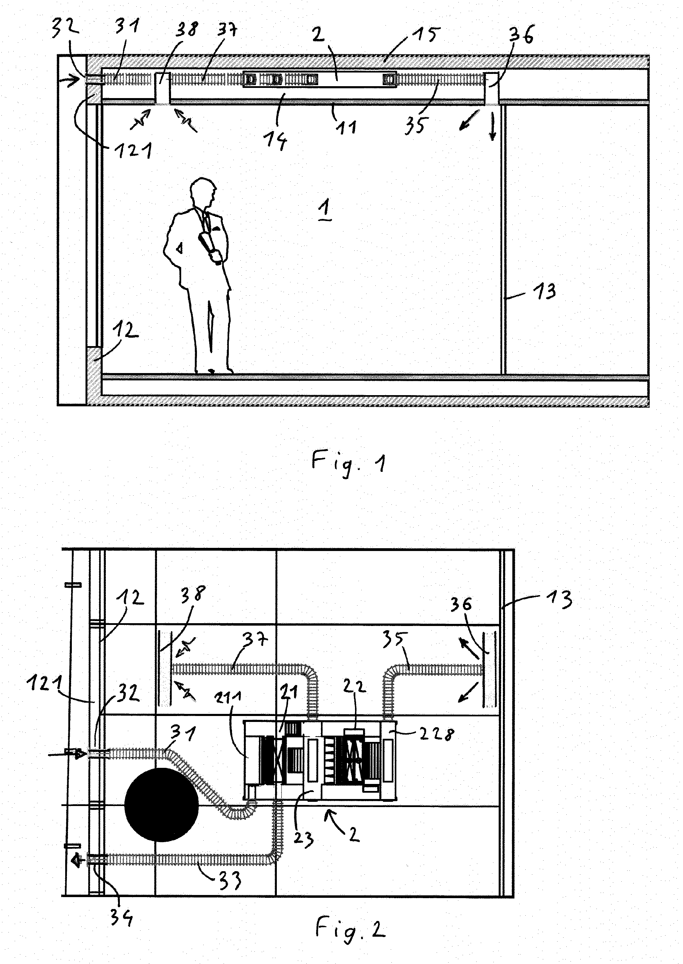

Sur le dessin de la figure 1, on a représenté un local de bureau 1 délimité notamment par un faux plafond 11, un mur extérieur 12 et une cloison intérieure 13. Le dispositif selon l'invention, constitué d'un module unitaire 2 est situé dans le plénum 14, ménagé de manière classique au-dessus du faux plafond 11 pour y loger des accessoires d'éclairage, les passages de câbles électriques, etc. Dans le mode d'implantation représenté figure 1, le module 2, d'une hauteur de 250 mm, est fixé sous la dalle supérieure 15 qui délimite, avec le faux plafond 11, le plénum 14, d'une hauteur d'environ 300 mm, de sorte qu'un espace subsiste entre le module 2 et le faux plafond 11.

Le module 2 est raccordé :
- par une gaine d'aspiration d'air extérieur 31 à une bouche d'entrée 32 placée en traversée du mur extérieur 12, dans la partie supérieure 121 de celui-ci, situé au dessus du niveau du faux plafond.
- par une gaine de refoulement d'air 33 à une bouche de sortie 34 placée en traversée du mur extérieur 12, dans la partie supérieure 121 de celui-ci,
- par une gaine de soufflage 35 à une bouche de répartition 36 placée en traversée du faux plafond 11, vers une extrémité du bureau, ou autre local, proche de la cloison intérieure dans l'exemple représenté,
- par au moins une gaine de recirculation 37 à une bouche d'aspiration 38 placée en traversée du faux plafond, vers une extrémité opposée du bureau, proche du mur extérieur 12 dans l'exemple représenté.

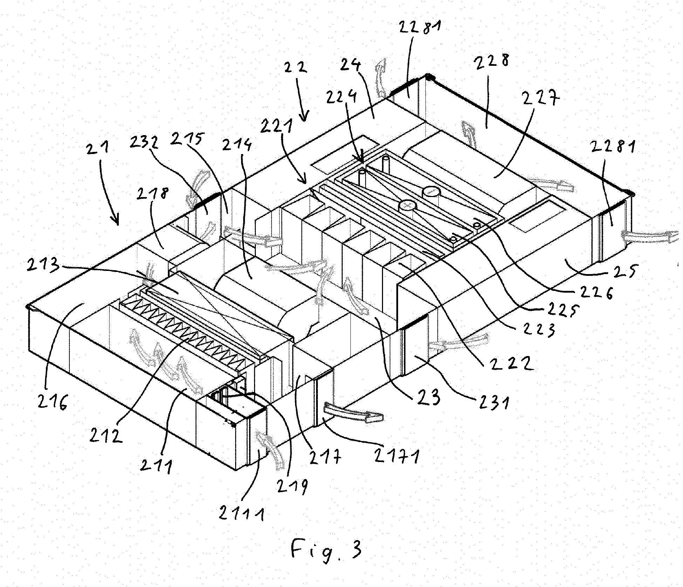

Le module 2, représenté plus en détail figure 3, est composé d'une unité de renouvellement d'air 21 et d'une unité de traitement climatique 22, ces deux unités étant accolées latéralement de part et d'autre d'une chambre de recirculation 23 de manière à former un ensemble de forme parallélépipédique, de 2,5 m de long, 1,3 m de large et 250 mm de hauteur.

L'unité de renouvellement d'air 21 comporte :
- une chambre d'aspiration d'air neuf 211,
- un filtre à air neuf 212,
- un échangeur thermique 213 comportant un circuit d'entrée et un circuit de sortie,
- un ventilateur d'air neuf 214 disposé pour souffler l'air neuf traversant le circuit d'entrée de l'échangeur 213 dans la chambre de recirculation 23 vers l'ensemble de filtration,
- une chambre de reprise 215, située au niveau de la chambre de recirculation et en communication avec celle-ci,
- un by-pass anti-condensation 216 situé en amont de l'échangeur 213,
- une chambre de sortie 217 située en aval de l'échangeur 213,
- un ventilateur de rejet d'air 218 agencé entre la chambre de reprise 215 et le by-pass 216 pour souffler de l'air repris du local vers la chambre de sortie 217 à travers le circuit de sortie de l'échangeur 213,
- un registre motorisé 219 d'air neuf pour gérer les variations de pression dues à la force du vent sur la façade (notamment dans le cas des immeubles de grande hauteur).

L'unité de renouvellement d'air 21 comporte par ailleurs :
- un orifice d'entrée d'air 2111 disposé sur la chambre d'aspiration d'air neuf 211 et sur lequel se connecte la gaine d'aspiration d'air extérieur 31, et
- un orifice d'extraction d'air 2171 situé sur la chambre de sortie 217 et sur lequel se connecte la gaine de refoulement d'air 33.

L'unité de traitement climatique 22 comporte :
- un ensemble 221 de filtration et purification d'air en communication directe avec la chambre de recirculation 23, comportant un deuxième filtre 222 et un purificateur d'air 223 par lampe UV dont la fonction est de tuer les bactéries retenues dans le filtre,
- un ensemble de climatisation 224, comportant une batterie de rafraîchissement 225 et une batterie de chauffage 226,
- un ventilateur de soufflage 227, et
- une chambre de diffusion 228.

Les orifices de communication avec le local comportent :
- un premier orifice de reprise d'air 231 disposé sur la chambre de recirculation 23 et sur lequel se connecte une gaine de recirculation 37,
- un second orifice de reprise d'air 232 disposé sur la chambre de reprise 215 et sur lequel se connecte aussi une gaine de recirculation 37,
- deux orifices de soufflage 2281 disposés sur la chambre de diffusion 228.

Le dispositif est complété par un compartiment électrique 24 situé sur un côté de l'unité de traitement climatique, contenant tous les appareillages de commande et régulation des ventilateurs, registre, connexion des résistances de chauffage, etc., et un compartiment hydraulique 25, situé de l'autre côté de l'unité de traitement climatique, comportant les moyens de connexion aux circuits extérieurs de fluides froid et chaud.

Le fonctionnement du système se comprend aisément au vu des explications précédentes sur la constitution du dispositif et va être résumé ci-après. Le ventilateur de soufflage 227 génère un mouvement d'air dans le local 1 via successivement la bouche d'aspiration 38, la gaine de recirculation 37, l'orifice de reprise d'air 231, la chambre de recirculation 23, le filtre 222, le purificateur d'air 223, l'ensemble de climatisation 224, le ventilateur 227 lui-même, la chambre de diffusion 228, la gaine de soufflage 35 et la bouche de répartition 36.

Une partie de l'air capté par l'orifice de reprise d'air 232 est également remis en circulation par la communication entre la chambre de reprise 215 et la chambre de recirculation 23 et le reste de l'air capté par l'orifice de reprise d'air 232 est aspirée par le ventilateur de rejet d'air 218 qui rejette cet air vers l'extérieur via le by-pass anti-condensation 216, le circuit de sortie de l'échangeur thermique 213, la chambre de sortie 217, l'orifice d'extraction d'air 2171, la gaine de refoulement d'air 33 et la bouche de sortie 34.

De l'air neuf est aspiré de l'extérieur du bâtiment, au travers du filtre 212 et du circuit d'entrée de l'échangeur 213 par le ventilateur 214 qui souffle cet air neuf. Dans la chambre de recirculation 23 où il se retrouve ménagé avec l'air recirculé provenant du local. Cet air neuf récupère par ailleurs de l'énergie thermique de l'air évacué vers l'extérieur lors de son passage dans l'échangeur 213.

Typiquement, la puissance de chauffage ou de refroidissement du dispositif et de 2000 Watts ou moins ; le débit d'air soufflé dans le local est de 0 à 500 ou 600 m³/heure suivant la température ambiante, et le débit d'air neuf est de 0 à 150 m³/heure suivant la qualité de l'air ambiant.

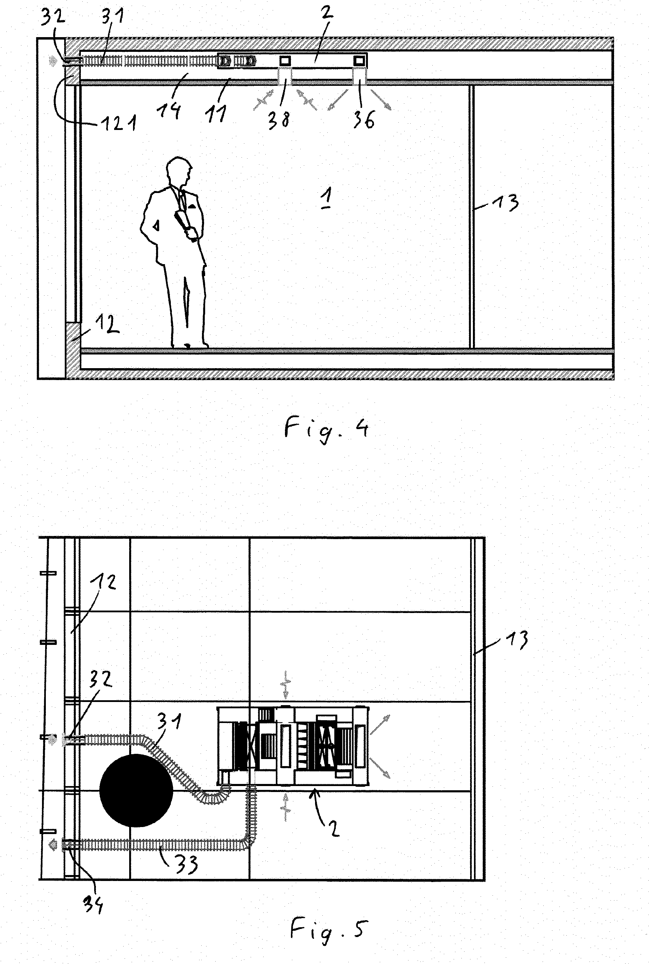

Les figures 4 et 5 illustrent un deuxième mode d'implantation du dispositif, dans lequel les orifices de communication avec le local sont directement reliés à des bouches 36', 38' ménagées dans le faux plafond, juste à l'aplomb de la chambre de diffusion 228 et de la chambre de recirculation 23, respectivement.

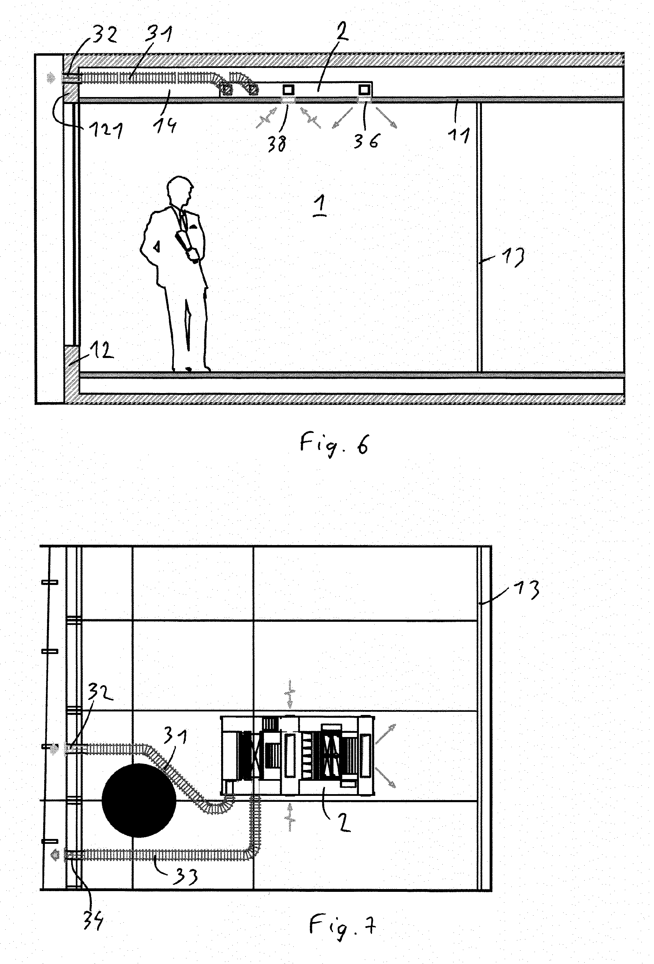

Les figures 6 et 7 illustrent un troisième mode d'implantation du dispositif, dans lequel le dispositif forme une cassette affleurant directement le faux plafond, le dispositif étant lors configuré pour que ses orifices de communication avec le local constituent directement les bouches du faux plafond.

On notera que ces deux dernières variantes évitent l'utilisation de gaines flexibles supplémentaires entre le dispositif et les bouches du faux plafond.

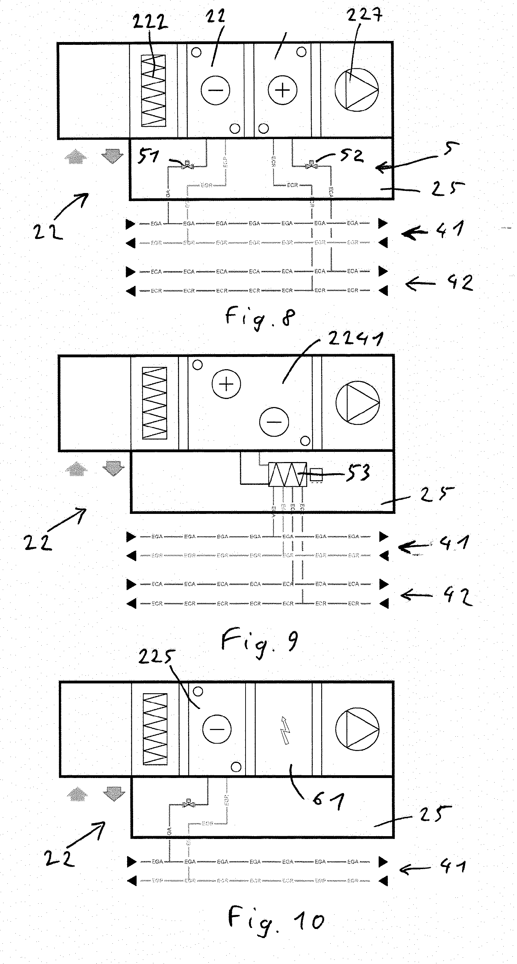

La figure 8 illustre un premier mode de réalisation des connexions aux sources chaudes et froides, dans lequel le dispositif est raccordé sur deux boucles externes de fluides, respectivement chaud et froid. La batterie de rafraîchissement 225 est raccordée, par des moyens de connexion 5 situés dans le compartiment hydraulique 25, sur une boucle d'eau glacée 41 par l'intermédiaire d'une électrovanne 51 et la batterie de chauffage 226 est raccordée de manière indépendante sur une boucle d'eau chaude 42 par l'intermédiaire d'une autre électrovanne 52.

La figure 9 illustre un deuxième mode de réalisation dans lequel l'ensemble de climatisation 224 comporte un seul corps 2241 et est raccordé sur deux boucles externes de fluides, respectivement chaud et froid, par l'intermédiaire d'une vanne 6 voies 53 agencée pour mettre le corps 2241 en communication alternativement avec la boucle d'eau glacée 41 et la boucle d'eau chaude 42.

La figure 10 illustre un troisième mode de réalisation dans lequel l'ensemble de climatisation 224 comporte seulement une batterie de rafraîchissement 225, raccordée sur une boucle d'eau glacée 41, et un dispositif de chauffage électrique 61 assure alors le chauffage.

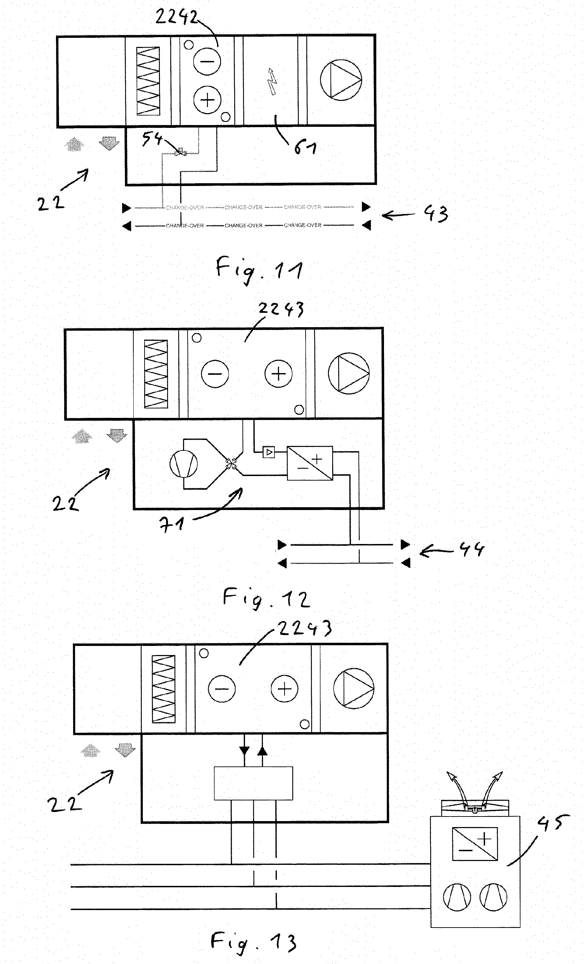

La figure 11 illustre un quatrième mode de réalisation dans lequel l'ensemble de climatisation 224 comporte seulement une batterie d'échange thermique 2242, raccordée par une électrovanne 54 sur une boucle d'eau glacée ou chaude 43 gérée extérieurement au dispositif, et un dispositif de chauffage électrique 61 assure un chauffage complémentaire au besoin.

La figure 12 illustre un cinquième mode de réalisation dans lequel l'ensemble de climatisation 224 comporte seulement une batterie d'échange thermique 2243, constituant un composant d'un ensemble de pompe à chaleur réversible 71 raccordée sur une boucle d'eau tempérée 44.

La figure 13 illustre un sixième mode de réalisation dans lequel l'ensemble de climatisation 224 comporte seulement une batterie d'échange thermique 2243, constituant un composant d'un ensemble de pompe à chaleur réversible, raccordé sur une unité extérieure de condensation/ évaporation 45.

Dans un autre mode de réalisation du dispositif de renouvellement et de traitement d'air, l'unité de renouvellement d'air 21' comporte un by-pass d'admission libre 210 comprenant depuis l'orifice d'entrée d'air extérieur 2111' un filtre 212', un canal 210 qui s'étend à côté de l'échangeur thermique 213, et un registre 2101 commandé par un moteur pour mettre en communication le canal 210 et l'entrée du ventilateur d'air neuf 214. Dans ce mode de réalisation, le canal 210 est traversé par un conduit 217' qui relie la sortie de l'échangeur thermique 214 à l'orifice d'extraction d'air 2171' et faisant la fonction de la chambre de sortie.

Le dispositif selon ce mode de réalisation fonctionne comme précédemment lorsque le registre 2101 est fermé. Par contre, il dispose d'un mode de fonctionnement, lorsque le registre 2101 est ouvert, dans lequel l'air frais en provenance de l'extérieur passe par le by-pass d'admission libre 210 vers le ventilateur d'air frais vers la chambre de recirculation 23. Cet air n'est ainsi pas réchauffé par l'air extrait, ce qui permet de rafraichir les locaux en évacuant des calories par l'air extrait.

On notera qu'un avantage spécifique de l'invention est que ces différentes variantes peuvent être mises en œuvre avec une simple modification ou substitution du sous-ensemble de climatisation 224, sans modification des autres éléments constitutifs du module selon l'invention, ce qui permet de standardiser au maximum ces composants tout en assurant une adaptabilité à des bâtiments disposants de sources d'énergie chaude ou froide différentes.

L'invention n'est pas limitée aux exemples de réalisations et d'implantation décrits précédemment. En particulier, un même dispositif pourrait aussi assurer le renouvellement et le traitement d'air pour plusieurs locaux contigus dans la mesure où ceux-ci partageraient un plénum de faux plafond commun, comme cela peut être le cas pour des ensembles de bureaux modulables à cloisons déplaçables.

## Revendications

1. Système de renouvellement et de traitement d'air décentralisé pour un local (1) situé dans un bâtiment, le système comportant une unité de traitement climatique (22) et une unité de renouvellement d'air (21), combinées en un module unique indépendant (2) agencé pour être placé dans un plénum (14) situé au dessus d'un faux-plafond (11) du local, et comportant à cet effet des orifices (2111, 2171) de communication avec l'extérieur du bâtiment, disposés sur l'unité de renouvellement d'air (21) et reliés à des bouches respectives (32, 34) destinées à être ménagées dans la paroi extérieure (12) du bâtiment, pour aspirer de l'air neuf extérieur et rejeter de l'air intérieur, et des orifices (231, 232, 2281) de communication avec le local (1), disposés sur l'unité de traitement climatique (22) et reliés à des bouches (38, 36) destinées à être aménagées dans le faux plafond pour assurer une circulation d'air dans le local, et des moyens de connexion (5) disposés sur l'unité de traitement climatique (22) pour connecter un ou des moyens de refroidissement et/ou de chauffage (41, 42, 43, 44, 61, 71, 45), l'unité de traitement climatique (22) et l'unité de renouvellement d'air (21) étant situées de part et d'autre d'une chambre de recirculation (23) où s'effectue un mélange d'air aspiré du local et d'air neuf issu de l'unité de renouvellement d'air, le module (2) étant raccordé :
- par une gaine d'aspiration d'air extérieur (31) à une bouche d'entrée (32) destinée à être placée en traversée du mur extérieur (12), dans la partie supérieure (121) de celui-ci, situé au dessus du niveau du faux plafond (11).
- par une gaine de refoulement d'air (33) à une bouche de sortie (34) destinée à être placée en traversée du mur extérieur (12), dans la partie supérieure (121) de celui-ci,
- par une gaine de soufflage (35) à une bouche de répartition (36) destinée à être placée en traversée du faux plafond (11), vers une extrémité du local,
- par au moins une gaine de recirculation (37) à une bouche d'aspiration (38) destinée à être placée en traversée du faux plafond, vers une extrémité opposée du local.

2. Système de renouvellement et de traitement d'air décentralisé selon la revendication 1, **caractérisé en ce que** les moyens de refroidissement comportent un circuit de fluide frigorigène (41)

3. Système de renouvellement et de traitement d'air décentralisé selon la revendication 1 ou 2, **caractérisé en ce que** les moyens de chauffage comportent une boucle d'eau chaude (42), ou une résistance électrique (61).

4. Système de renouvellement et de traitement d'air décentralisé selon l'une des revendications 1 à 3, **caractérisé en ce que** les moyens de refroidissement et/ou de chauffage sont combinés en utilisant des systèmes de pompe à chaleur réversible sur boucle d'eau tempérée (71, 44) ou sur unité de condensation et évaporation extérieure (45).

5. Dispositif de renouvellement et de traitement d'air pour un système de renouvellement et de traitement d'air décentralisé selon l'une quelconque des revendications précédentes, le dispositif étant agencé sous forme d'un module unique indépendant (2) agencé pour être placé dans un plénum (14) situé au dessus d'un faux-plafond (11) d'un local (1), et en ce qu'il comporte :
- une unité de traitement climatique (22) et une unité de renouvellement d'air (21) combinées, situées de part et d'autre d'une chambre de recirculation (23) où s'effectue un mélange d'air aspiré du local et d'air neuf issu de l'unité de renouvellement d'air,
- des orifices (2111, 2171) de communication avec l'extérieur du bâtiment disposés sur l'unité de renouvellement d'air (21), agencés pour aspirer de l'air neuf extérieur et rejeter de l'air intérieur,
- des orifices (231, 232, 2281) de communication avec le local (1) disposés sur l'unité de traitement climatique (22) et la chambre de recirculation (23) et agencés pour assurer une circulation d'air dans le local,
- des moyens de connexion (5) disposés sur l'unité de traitement climatique pour connecter un ou des moyens de refroidissement et/ou de chauffage (41, 42, 43, 44, 61, 71, 45).

6. Dispositif de renouvellement et de traitement d'air selon la revendication 5, **caractérisé en ce qu'**il constitue un ensemble de forme parallélépipédique, de hauteur inférieure à 300 mm, préférentiellement de l'ordre de 250 mm, de longueur de l'ordre de 2500 mm et de largeur de l'ordre de 1300 mm.

7. Dispositif de renouvellement et de traitement d'air selon la revendication 5 ou 6, **caractérisé en ce que** l'unité de traitement climatique (22) comporte, successivement dans le sens de circulation du flux d'air, un ensemble (221) de filtration et purification d'air en communication directe avec la chambre de recirculation (23), un ensemble de climatisation (224), un ventilateur de soufflage (227), et une chambre de diffusion (228).

8. Dispositif de renouvellement et de traitement d'air selon l'une des revendications 5 à 7, **caractérisé en ce que** l'unité de renouvellement d'air (21) comporte, successivement dans le sens de circulation du flux d'air, une chambre d'aspiration d'air neuf (211), un filtre à air neuf (212), un échangeur thermique (213) comportant un circuit d'entrée et un circuit de sortie, un ventilateur d'air neuf (214) disposé pour souffler l'air neuf traversant le circuit d'entrée de l'échangeur dans la chambre de recirculation (23), et un ventilateur de rejet d'air (218) agencé entre une chambre de reprise (215) et l'échangeur (213) pour souffler de l'air repris vers une chambre de sortie (217) à travers le circuit de sortie de l'échangeur.

9. Dispositif de renouvellement et de traitement d'air selon la revendication 8, **caractérisé en ce que** l'unité de renouvellement d'air (21) comporte en outre un by-pass d'admission libre (210) reliant l'orifice d'aspiration d'air extérieur (2111') avec l'amont du ventilateur d'air neuf (214) pour admettre de l'air neuf sans échange thermique avec l'air repris.

10. Dispositif de renouvellement et de traitement d'air selon la revendication 8 ou 9, **caractérisé en ce que** les orifices de communication avec le local comportent au moins un orifice de reprise d'air (231) disposé sur la chambre de recirculation (23) et au moins un orifice de soufflage (2281) disposé sur la chambre de diffusion (228) de l'unité de traitement climatique (22).

11. Dispositif de renouvellement et de traitement d'air selon l'une des revendications 8 à 10, **caractérisé en ce que** les orifices de communication avec l'extérieur du bâtiment comportent un orifice d'entrée d'air (2111) disposé sur la chambre d'aspiration d'air neuf (211), et un orifice d'extraction d'air (2171) situé sur la chambre de sortie (217).

12. Dispositif de renouvellement et de traitement d'air selon l'une des revendications 5 à 11, **caractérisé en ce que** l'unité de traitement climatique (22) et l'unité de renouvellement d'air (21) sont disposées l'une contre l'autre dans le sens de la longueur du module (2), reliées par la chambre de recirculation (23), et des compartiments électriques (24) et hydrauliques (25) sont disposés latéralement sur les côtés de l'unité de traitement climatique (22).

## Patentansprüche

1. Dezentrales System zur Lufterneuerung und Luftaufbereitung für einen Raum (1) in einem Gebäude, wobei das System eine Einheit zur klimatechnischen Behandlung (22) und eine Einheit zur Lufterneuerung (21) umfasst, die in einem einzigen, unabhängigen Modul (2) zusammengefasst sind, das so gestaltet ist, dass es in einem Zwischenraum (14) über einer Zwischendecke (11) des Raums untergebracht werden kann, und zu diesem Zweck umfassend:
Verbindungsöffnungen (2111, 2171) nach außerhalb des Gebäudes, die auf der Einheit zur Lufterneuerung (21) angeordnet und mit entsprechenden Stutzen (32, 34) verbunden sind, die in der Außenwand (12) des Gebäudes eingerichtet werden, um die Frischluft von außen anzusaugen und die Innenluft abzuführen, und Verbindungsöffnungen (231, 232, 2281) zum Raum (1), die auf der Einheit zur klimatechnischen Behandlung (22) angeordnet und mit Stutzen (38, 36) verbunden sind, die in der Zwischendecke eingerichtet werden, um eine Luftzirkulation in dem Raum sicherzustellen, und Anschlussmittel (5), die auf der Einheit zur klimatechnischen Behandlung (22) angeordnet sind, zum Anschließen von einem oder mehreren Kühl- und/oder Heizmitteln (41, 42, 43, 44, 61, 71, 45), wobei die Einheit zur klimatechnischen Behandlung (22) und die Einheit zur Lufterneuerung (21) zu beiden Seiten einer Umwälzkammer (23) angeordnet sind, in der eine Mischung der angesaugten Raumluft mit der Frischluft aus der Einheit zur Lufterneuerung erfolgt, und wobei das Modul (2) verbunden ist
- über einen Zuluftkanal (31), mit einem Einlassstutzen (32), der im oberen Bereich (121) der Außenwand, über der Höhe der Zwischendecke (11), durch die Außenwand (12) geführt wird,
- über einen Abluftkanal (33), mit einem Auslassstutzen (34), der im oberen Bereich (121) der Außenwand durch die Außenwand (12) geführt wird,
- über einen Gebläsekanal (35), mit einem Verteilstutzen (36), der durch die Zwischendecke (11) geführt wird, zu einem Ende des Raums,
- über mindestens einen Umluftkanal (37), mit einem Ansaugstutzen (38), der durch die Zwischendecke geführt wird, zu einem gegenüberliegenden Ende des Raums.

2. Dezentrales System zur Lufterneuerung und Luftaufbereitung nach Anspruch 1, **dadurch gekennzeichnet, dass** die Kühlmittel einen Kältemittelkreislauf (41) umfassen.

3. Dezentrales System zur Lufterneuerung und Luftaufbereitung nach Anspruch 1 oder 2, **dadurch gekennzeichnet, dass** die Heizmittel einen Warmwasserkreis (42) oder einen elektrischen Widerstand (61) umfassen.

4. Dezentrales System zur Lufterneuerung und Luftaufbereitung nach einem der Ansprüche 1 bis 3, **dadurch gekennzeichnet, dass** die Kühl- und/oder die Heizmittel kombiniert sind, indem Systeme mit Wärmepumpe an Kaltwasserkreis (71, 44) oder an externer Kondensations- und Verdampfungseinheit (45) verwendet werden.

5. Vorrichtung zur Lufterneuerung und Luftaufbereitung für ein dezentrales System zur Lufterneuerung und Luftaufbereitung nach einem der vorstehenden Ansprüche, < wobei die Vorrichtung > in Form eines einzigen, unabhängigen Moduls (2) ausgebildet ist, das so gestaltet ist, dass es in einem Zwischenraum (14) über einer Zwischendecke (11) eines Raums (1) untergebracht werden kann, und umfassend
- eine Einheit zur klimatechnischen Behandlung (22) kombiniert mit einer Einheit zur Lufterneuerung (21), die zu beiden Seiten einer Umwälzkammer (23) angeordnet sind, in der eine Mischung der angesaugten Raumluft mit der Frischluft aus der Einheit zur Lufterneuerung erfolgt,
- Verbindungsöffnungen (2111, 2171) nach außerhalb des Gebäudes, die auf der Einheit zur Lufterneuerung (21) angeordnet sind, um die Frischluft von außen anzusaugen und die Innenluft abzuführen,
- Verbindungsöffnungen (231, 232, 2281) zum Raum (1), die auf der Einheit zur klimatechnischen Behandlung (22) und der Umwälzkammer (23) angeordnet sind, um eine Luftzirkulation in dem Raum sicherzustellen,
- Anschlussmittel (5), die auf der Einheit zur klimatechnischen Behandlung angeordnet sind, zum Anschließen von einem oder mehreren Kühl- und/oder Heizmitteln (41, 42, 43, 44, 61, 71, 45).

6. Vorrichtung zur Lufterneuerung und Luftaufbereitung nach Anspruch 5, **dadurch gekennzeichnet, dass** sie eine parallelepipedförmige Einheit bildet, mit einer Höhe von weniger als 300 mm, vorzugsweise von 250 mm, mit einer Länge von 2500 mm und mit einer Breite von 1300 mm.

7. Vorrichtung zur Lufterneuerung und Luftaufbereitung nach Anspruch 5 oder 6, **dadurch gekennzeichnet, dass** die Einheit zur klimatechnischen Behandlung (22) in Zirkulationsrichtung des Luftstroms nacheinander umfasst: eine Einheit (221) zum Filtern und Reinigen der Luft in direkter Verbindung mit der Umwälzkammer (23), eine Klimatisierungseinheit (224), einen Zuluftventilator (227) und eine Verteilkammer (228).

8. Vorrichtung zur Lufterneuerung und Luftaufbereitung nach einem der Ansprüche 5 bis 7, **dadurch gekennzeichnet, dass** die Einheit zur Lufterneuerung (21) in Zirkulationsrichtung des Luftstroms nacheinander umfasst: eine Außenluftansaugkammer (211), einen Außenluftfilter (212), einen Wärmetauscher (213) mit einem Vorlauf und einem Rücklauf, einen Zuluftventilator (214), der so angeordnet ist, dass die Frischluft durch den Vorlauf des Wärmetauschers in die Umwälzkammer (23) geblasen wird, und einem Abluftventilator (218), der zwischen einer Abluftkammer (215) und dem Wärmetauscher (213) angeordnet ist, um die Abluft durch den Rücklauf des Wärmetauschers in eine Ausgangskammer (217) zu blasen.

9. Vorrichtung zur Lufterneuerung und Luftaufbereitung nach Anspruch 8, **dadurch gekennzeichnet, dass** die Einheit zur Lufterneuerung (21) zudem einen Bypass für den freien Lufteinlass (210) umfasst, der die Außenluftansaugöffnung (2111') mit dem Einlass des Zuluftventilators (214) verbindet, um Frischluft einzulassen, ohne Wärmetausch mit der Abluft.

10. Vorrichtung zur Lufterneuerung und Luftaufbereitung nach Anspruch 8 oder 9, **dadurch gekennzeichnet, dass** die Verbindungsöffnungen zu dem Raum mindestens eine Abluftöffnung (231) umfassen, die auf der Umwälzkammer (23) angeordnet ist, und mindestens eine Zuluftöffnung (2281), die auf der Verteilkammer (228) der Einheit zur klimatechnischen Behandlung (22) angeordnet ist.

11. Vorrichtung zur Lufterneuerung und Luftaufbereitung nach einem der Ansprüche 8 bis 10, **dadurch gekennzeichnet, dass** die Verbindungöffnungen nach außerhalb des Gebäudes einen Lufteinlass (2111) umfassen, der auf der Außenluftansaugkammer (211) angeordnet ist, und einen Luftauslass (2171), der auf der Ausgangskammer (217) angeordnet ist.

12. Vorrichtung zur Lufterneuerung und Luftaufbereitung nach einem der Ansprüche 5 bis 11, **dadurch gekennzeichnet, dass** die Einheit zur klimatechnischen Behandlung (22) und die Einheit zur Lufterneuerung (21) in Längsrichtung des Moduls (2) gegeneinander angeordnet sind, verbunden durch die Umwälzkammer (23), und dass Elektrikfächer (24) und Hydraulikfächer (25) seitlich zu beiden Seiten der Einheit zur klimatechnischen Behandlung (22) angeordnet sind.

## Claims

1. Decentralised air renewal and treatment system for a room (1) situated in a building, the "system", including a climatic treatment unit (22) and an air renewal unit (21), combined in a single standalone module (2) designed to be placed in a plenum (14) situated above a false ceiling (11) in the room, and including for this purpose openings (2111, 2171) communicating with the exterior of the building, located on the air renewal unit (21) and connected to vents (32, 34) respectively intended to be made in the outer wall (12) of the building, to take in the new air from the exterior and discharge the interior air, and openings (231, 232, 2281) communicating with the room (1), located on the climatic treatment unit (22) and connected to the vents (38, 36) intended to be made in the false ceiling to ensure the circulation of air in the room, and means of connection (5) located on the climatic treatment unit (22) to connect one or more cooling and/or heating means (41, 42, 43, 44, 61, 71, 45), the climatic treatment unit (22) and the air renewal unit (21) being situated on either side of a recirculation chamber (23) where the air sucked in from the room is mixed with the new air delivered by the air renewal unit, the module (2) being connected:
- by an external air intake duct (31) to an intake vent (32) intended to be installed passing through the exterior wall (12), in the latter's upper part (121), situated above the level of the false ceiling (11).
- by an air discharge duct (33) to an outlet vent (34) intended to be installed passing through the exterior wall (12), in the latter's upper part (121),
- by a blower duct (35) to a distribution vent (36) intended to be installed passing through the false ceiling (11), directed towards one end of the room,
- by at least one recirculation duct (37) to an intake vent (38) intended to be installed passing through the false ceiling, directed towards the opposite end of the room.

2. Decentralised air renewal and treatment system as per claim 1, **characterised by** the fact the cooling means include a refrigerating fluid circuit (41).

3. Decentralised air renewal and treatment system as per claim 1 or 2, **characterised by** the fact the heating means include a hot water loop (42), or an electric heater element (61).

4. Decentralised air renewal and treatment system as per one of the claims 1 to 3, **characterised by** the fact the cooling and/or heating means are combined using reversible heat pump systems on a temperate water loop (71, 44) or on an exterior condensation and evaporation unit (45).

5. Air renewal and treatment device for a decentralised air renewal and treatment system as per any one of the previous claims, the device being designed in the form of a single standalone module (2) designed to be placed in a plenum (14) situated above a false ceiling (11) of a room (1), and that comprises:
- a combined climatic treatment unit (22) and air renewal unit (21), situated on either side of a recirculation chamber (23) where the air sucked in from the room is mixed with the new air delivered by the air renewal unit,
- openings (2111, 2171) communicating with the exterior of the building, located on the air renewal unit (21), designed to suck in the new air from the exterior and discharge the air from the interior,
- openings (231, 232, 2281) communicating with the room (1) situated on the climatic treatment unit (22) and the recirculation chamber (23) and designed to ensure the circulation of air in the room,
- means of connection (5) placed on the climatic treatment unit to connect one or more cooling and/or heating systems (41, 42, 43, 44, 61, 71, 45).

6. Air renewal and treatment device as per claim 5, **characterised by** the fact it constitutes an assembly of parallelepipedal shape, with a height of less than 300mm, preferably of about 250mm, with a length of about 2,500mm and a width of about 1,300mm.

7. Air renewal and treatment device as per claim 5 or 6, **characterised by** the fact the climatic treatment unit (22) includes, successively in the air flow circulation direction, an air filtering and purification assembly (221) communicating directly with the recirculation chamber (23), an air conditioning assembly (224), a blower fan (227), and a distribution chamber (228).

8. Air renewal and treatment device as per one of the claims 5 to 7, **characterised by** the fact the air renewal unit (21) includes, successively in the air flow circulation direction, a new air intake chamber (211), a new air filter (212), a heat exchanger (213) including an intake circuit and an output circuit, a new air fan (214) positioned to blow the new air through the exchanger's intake circuit into the recirculation chamber (23), and an air discharge fan (218) positioned between a recovery chamber (215) and the exchanger (213) to blow recovered air to an output chamber (217) through the exchanger's output circuit.

9. Air renewal and treatment device as per claim 8, **characterised by** the fact the air renewal unit (21) also includes a free admission by-pass (210) connecting the exterior air intake opening (2111') upstream of the new air fan (214) to admit the new air without any exchange of heat with the recovered air.

10. Air renewal and treatment device as per claim 8 or 9, **characterised by** the fact the openings communicating with the room include at least one air recovery opening (231) placed on the recirculation chamber (23) and at least one blower opening (2281) positioned on the distribution chamber (228) of the climatic treatment unit (22).

11. Air renewal and treatment device as per one of the claims 8 to 10, **characterised by** the fact the openings communicating with the exterior of the building include an air intake opening (2111), positioned on the new air intake chamber (211), and an air extraction opening (2171) located on the output chamber (217).

12. Air renewal and treatment device as per one of the claims 5 to 11, **characterised by** the fact the climatic treatment unit (22) and the air renewal unit (21) are positioned one against the other in the lengthwise direction of the module (2), connected by the recirculation chamber (23), and electrical (24) and hydraulic (25) compartments are positioned laterally on the sides of the climatic treatment unit (22).
